# FASCICULE DE BREVET EUROPEEN

(11) **EP 1 271 906 B1**
(45) Date de publication et mention de la délivrance du brevet: **25.04.2007**
(21) Numéro de dépôt: 02354102.2
(22) Date de dépôt: 26.06.2002
(51) Int. Cl.: H04M 3/493

(54) **Procédé de sélection d'un correspondant et de connexion**
Verfahren zur Auswahl einer Rufbestimmung und Rufverbindung
Method of selecting a call destination and connection

(30) Priorité: 29.06.2001 FR 0108595
(43) Date de publication de la demande: 02.01.2003
(73) Titulaire: Eloquant, 38420 Le Versoud (FR)
(72) Inventeur: Wyld, Brian, 38190 Brignoud (FR); Rosset, Jean-Michel, 38410 Saint Martin d'Uriage (FR)
(74) Mandataire: de Beaumont, Michel

(56) Documents cités:
- EP-A- 0 178 111
- EP-A- 0 800 304
- US-A- 5 339 352
- US-A- 5 613 006
- US-A- 5 943 417
- US-A- 5 950 165

## Description

La présente invention concerne un procédé de sélection d'un correspondant par un utilisateur au moyen d'un guide de sélection de correspondant, et la mise en relation, via le réseau téléphonique, de l'utilisateur et du correspondant.

Actuellement, de nombreux guides de sélection de correspondant proposent l'accès à des bases de données sur lesquelles un utilisateur peut effectuer une recherche pour obtenir des informations sur des correspondants, en particulier leurs coordonnées téléphoniques. Ces guides de sélection de correspondant permettent souvent d'effectuer des recherches détaillées selon de nombreux critères de recherche.

Un utilisateur peut, par exemple, rechercher le numéro de téléphone d'un restaurant, auquel cas le guide de sélection peut proposer des critères de recherche tels que la spécialité du restaurant, les prix proposés, etc., et fournir tout type d'informations associées aux correspondants susceptibles d'intéresser l'utilisateur. De tels guides de sélection peuvent être accessibles par Internet, depuis le Minitel, ou bien encore par l'envoi de messages du type SMS ou WML depuis un téléphone portable. Le guide de sélection peut également consister en un service vocal accessible depuis un téléphone fixe ou portable.

Suite à la sélection d'un correspondant par l'utilisateur, celui-ci obtient le numéro de téléphone du correspondant qu'il peut composer ultérieurement pour être mis en relation directement, via le réseau téléphonique, avec le correspondant.

Le document de brevet US 5 613 006 décrit un système d'assistance annuaire téléphonique capable d'effectuer une connexion automatique entre un appelant et un utilisateur dont le numéro téléphonique n'est pas public.

Le document de brevet US 5 339 352 décrit un procédé pour facturer, à un utilisateur de téléphonie mobile, une connexion automatique par moyens d'un service d'assistance annuaire appartenant au réseau fixe.

Une difficulté, pour les gestionnaires des guides de sélection de correspondant, est de facturer de façon simple et efficace le service qu'ils proposent. Une première possibilité est de faire souscrire un abonnement à l'utilisateur pour pouvoir consulter les informations fournies par le guide de sélection de correspondant. Cette possibilité s'avère peut satisfaisante étant donné la réticence habituelle d'utilisateurs potentiels pour souscrire à tout type d'abonnement.

Une seconde possibilité consiste à transmettre à l'utilisateur, suite à la sélection d'un correspondant, non pas le numéro de téléphone "direct" du correspondant mais un numéro à tarification spéciale. A ce numéro de téléphone à tarification spéciale est associé le numéro de téléphone traditionnel du correspondant, de sorte que lorsqu'un utilisateur compose le numéro à tarification spéciale, il est mis en relation avec un central téléphonique qui oriente l'appel vers le correspondant.

Les numéros de téléphone à tarification spéciale sont proposés par l'administrateur du réseau téléphonique. Ils peuvent être loués suivant un large éventail de formules possibles. Le principe général est que le coût d'un appel composé avec un numéro à tarification spéciale soit réparti entre l'utilisateur, le propriétaire et le loueur du numéro. Ainsi, par l'utilisation de numéros à tarification spéciale, les gestionnaires des guides de sélection peuvent percevoir une rémunération des efforts investis dans la création de bases de données et d'interfaces, et l'utilisateur n'est éventuellement facturé que pour les appels qu'il a composé avec le numéro à tarification spéciale.

Actuellement, à un numéro de téléphone à tarification spéciale correspond un unique numéro de téléphone de correspondant. Si le gestionnaire du guide de sélection de correspondant souhaite offrir un nombre important de choix de correspondants sélectionnables en même temps, il devra disposer d'un nombre égal de numéro de téléphone à tarification spéciale. Or, de tels numéros peuvent présenter des coûts très importants de location.

La présente invention vise à proposer un procédé de sélection d'un correspondant par un utilisateur au moyen d'un guide de sélection de correspondant et de mise en relation de l'utilisateur avec le correspondant permettant un mode de paiement simple du service proposé par le guide de sélection de correspondant.

L'invention vise également à permettre au gestionnaire du guide de sélection de correspondant de ne devoir acquérir qu'un nombre limité de numéros de téléphone à tarification spéciale.

Pour ce faire, la présente invention prévoit un procédé de sélection d'un correspondant par un utilisateur au moyen d'un guide de sélection de correspondant, et mise en relation, via le réseau téléphonique, de l'utilisateur et du correspondant, comprenant les étapes suivantes:
- sélection d'un correspondant par l'utilisateur au moyen du guide de sélection de correspondant, et transmission par ce guide à l'utilisateur d'un numéro de téléphone générique ;
- composition par l'utilisateur du numéro de téléphone générique, et établissement d'une liaison, via le réseau téléphonique, entre l'utilisateur et un central téléphonique de réorientation d'appels ;
- établissement, par le central téléphonique, d'une liaison téléphonique, entre l'utilisateur et le correspondant en utilisant le numéro de téléphone générique, et un identifiant de l'utilisateur, issus de la liaison avec l'utilisateur, et un numéro de téléphone direct du correspondant, issu d'une liaison avec le guide de sélection de correspondant.

Selon un mode de réalisation de la présente invention, le guide de sélection de correspondant transmet à un répertoire d'associations le numéro de téléphone générique, l'identifiant de l'utilisateur, et le numéro de téléphone direct du correspondant sélectionné, le central téléphonique venant interroger le répertoire d'associations à partir du numéro de téléphone générique et de l'identifiant de l'utilisateur pour obtenir le numéro de téléphone direct du correspondant.

Selon un mode de réalisation de la présente invention, le guide de sélection de correspondant transmet à l'utilisateur un numéro de téléphone générique choisi parmi un ensemble de numéros de téléphone génériques disponibles, et retire alors le numéro de téléphone générique choisi de l'ensemble des numéros de téléphone génériques disponibles.

Selon un mode de réalisation de la présente invention, lorsque le répertoire d'associations reçoit du central téléphonique un numéro de téléphone générique, il le transmet au guide de sélection de correspondant qui replace ce numéro de téléphone générique dans l'ensemble des numéros de téléphone génériques disponibles.

Selon un mode de réalisation de la présente invention, le guide de sélection de correspondant replace le numéro de téléphone générique dans l'ensemble des numéros de téléphone génériques disponibles lorsque la durée écoulée depuis le dernier retrait du numéro de téléphone générique de l'ensemble des numéros de téléphone génériques disponibles dépasse une durée déterminée.

Selon un mode de réalisation de la présente invention, l'identifiant de l'utilisateur est le numéro de téléphone du poste téléphonique de l'utilisateur à partir duquel le numéro de téléphone générique est composé.

Selon un mode de réalisation de la présente invention, l'identifiant de l'utilisateur comprend au moins un code numérique, ce code étant composé à la suite du numéro de téléphone générique.

Selon un mode de réalisation de la présente invention, l'identifiant de l'utilisateur et le numéro de téléphone générique sont confondus.

L'invention prévoit également un dispositif de sélection d'un correspondant par un utilisateur et de mise en relation, via le réseau téléphonique, d'un poste téléphonique de l'utilisateur sur lequel un numéro de téléphone générique a été composé, avec un poste téléphonique du correspondant ayant un numéro de téléphone direct, comprenant un module d'échange de données propre à transmettre à un guide de sélection de correspondant une sélection réalisée par l'utilisateur, le guide de sélection de correspondant envoyant en retour au module d'échange de données le numéro de téléphone générique, un central téléphonique propre à orienter l'appel, émis par le poste téléphonique de l'utilisateur, vers le poste téléphonique du correspondant au moyen du numéro de téléphone direct du correspondant, et un répertoire d'associations propre à recevoir du guide de sélection de correspondant le numéro de téléphone générique, le numéro de téléphone direct du correspondant, et l'identifiant de l'utilisateur, et à transmettre au central téléphonique, sur requête de celui-ci, le numéro de téléphone direct du correspondant.

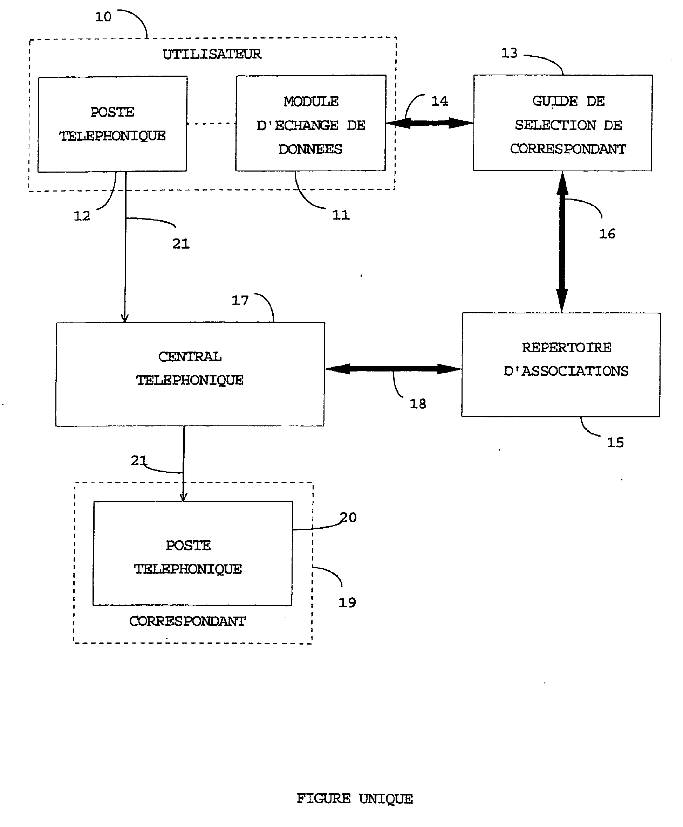

Ces objets, caractéristiques et avantages, ainsi que d'autres de la présente invention seront exposés en détail dans la description suivante de modes de réalisation particuliers faite à titre non-limitatif en relation avec la figure jointe qui représente un schéma général du dispositif selon l'invention.

Selon un premier mode de réalisation de la présente invention, illustré sur la figure unique, un utilisateur 10 dispose d'un système de liaison, qui inclut un module d'échange de données 11 et un poste téléphonique 12. De tels systèmes existent sous forme de téléphones portables. Le module d'échange de données 11 permet par l'intermédiaire d'une première liaison 14 d'accéder à des données fournies par un guide de sélection de correspondant 13. La liaison 14 autorise l'échange de messages de type SMS entre le module d'échange de données 11 et le guide de sélection de correspondant 13.

Le guide de sélection de correspondant 13 peut contenir, de façon classique, un microprocesseur échangeant des données avec une base de données et pouvant émettre et recevoir des données à distance au moyen d'une interface d'échange de données. Ces éléments font partie des connaissances générales de l'homme de l'art et ne sont pas représentés sur la figure unique. De même, les différents protocoles de communication mentionnés dans la présente description sont tous des protocoles connus de l'homme de l'art et ne seront pas détaillés davantage par la suite.

Le guide de sélection de correspondant 13 est relié à un répertoire d'associations 15 par l'intermédiaire d'une seconde liaison 16. La seconde liaison 16 correspond éventuellement au réseau Internet permettant l'échange de données sous différents protocoles de communication connus de l'homme du métier. En particulier, l'échange de données sur la liaison 16 peut être sécurisé.

Le répertoire d'associations 15 est adapté à échanger et recevoir des données avec un central téléphonique 17 selon une troisième liaison 18. Éventuellement, le répertoire d'associations 15 est intégré au central téléphonique 17.

Le procédé de sélection d'un correspondant 19 par l'utilisateur 10 et de mise en relation de l'utilisateur 10 avec le correspondant 19, selon ce premier mode de réalisation, se déroule de la façon suivante.

L'utilisateur 10, au moyen du module d'échange de données 11, établit une liaison avec le guide de sélection de correspondant 13 via la première liaison 14. L'utilisateur 10 à accès sur le guide de sélection de correspondant 13 à une base de données lui permettant d'effectuer une recherche de correspondants, éventuellement à l'aide de critères de recherche. A l'issue de cette recherche, l'utilisateur 10 sélectionne un correspondant 19 avec lequel il souhaite être mis en relation. Le guide de sélection 13 transmet alors à l'utilisateur 10, un numéro de téléphone générique, par exemple un numéro à tarification spéciale. Le numéro de téléphone générique n'est pas le numéro de téléphone "direct" du correspondant 19, c'est-à-dire celui permettant un accès direct au poste téléphonique 20 du correspondant 19, via le réseau téléphonique 21.

Dans le cas où le téléphone portable de l'utilisateur 10 dispose d'une fonction du type "SMS CLICK-THRT", l'utilisateur 10 peut sélectionner directement le numéro de téléphone générique transmis par le guide de sélection de correspondant 13 pour initier la communication, via le réseau téléphonique 21, à partir de ce numéro de téléphone générique. La composition du numéro de téléphone générique établit une liaison, via le réseau téléphonique 21, entre l'utilisateur 10 et le central téléphonique 17.

Le guide de sélection de correspondant 13 possède une base de données dans laquelle est mémorisée l'association du numéro de téléphone générique transmis à l'utilisateur 10 et du numéro de téléphone direct du correspondant 19 sélectionné par l'utilisateur 10. Le guide de sélection de correspondant 13 a également accès au numéro de téléphone de l'utilisateur 10 vu le protocole d'échange de données de type SMS entre le guide de sélection de correspondant 13 et le module d'échange de données 11 du téléphone portable de l'utilisateur 10.

Le guide de sélection de correspondant 13 transmet ces trois données au répertoire d'associations 15 qui les conserve dans une mémoire.

Le central téléphonique 17 détermine le numéro d'appel générique composé par l'utilisateur 10 ainsi que le numéro de téléphone de l'utilisateur 10 selon le protocole d'échange entre le central téléphonique 17 et le réseau téléphonique 21. Le central téléphonique 17 émet alors une requête à destination du répertoire d'associations 15, qui comporte le numéro de téléphone générique et le numéro de téléphone de l'utilisateur 20, pour l'obtention du numéro de téléphone direct du correspondant 19. A réception de la requête, le répertoire d'associations 15 transmet au central téléphonique 17 le numéro de téléphone direct du correspondant 19. Le central téléphonique 17 réoriente alors l'appel de l'utilisateur 10 vers le correspondant 19 selon les technologies d'orientation d'appel classiques.

A titre d'exemple, un utilisateur 10 peut vouloir réserver des places dans un restaurant. Il recherche sur un guide de sélection de correspondant 13 des restaurants susceptibles de l'intéresser à l'aide des critères de recherche proposés par le guide de sélection de correspondant 13, par exemple le type de restaurant, les prix proposés, etc. A partir des informations obtenues, l'utilisateur 10 sélectionne un restaurant particulier. Le guide de sélection de correspondant 13 lui envoie alors un numéro de téléphone générique, qu'il transmet également au répertoire d'associations 15 avec le numéro de téléphone de l'utilisateur 10 et le numéro de téléphone direct du restaurant sélectionné. Lorsque l'utilisateur 10 compose le numéro de téléphone générique, il est mis en relation avec un central téléphonique 14, qui interroge le répertoire d'associations 15 pour obtenir le numéro de téléphone direct du restaurant, et met en relation l'utilisateur avec le restaurant sélectionné. Selon un autre exemple, un utilisateur 10 peut faire une recherche sur un guide de sélection de correspondant 13 proposant des informations sur les taux pratiqués par des banques, puis en sélectionner une pour prendre rendez-vous, via le réseau téléphonique, avec un conseiller financier de la banque sélectionnée.

En associant aux deux données, numéro de téléphone générique et numéro de téléphone direct du correspondant 19, la troisième donnée correspondant au numéro de téléphone de l'utilisateur 10, qui peut être considérée comme un identifiant de l'utilisateur 10, il est possible de diminuer considérablement le nombre de numéros de téléphone génériques utilisés par le guide de sélection de correspondant 13. En particulier, un unique numéro de téléphone générique pourrait être associé à tous les numéros de téléphone direct de correspondants proposés par le guide de sélection de correspondant 13.

Le numéro de téléphone générique peut être un numéro de téléphone à tarification spéciale. Le procédé de mise en relation de l'utilisateur 10 avec le correspondant 19 permet alors au guide de sélection de correspondant 13 de percevoir un paiement pour le service fourni.

Ce premier mode de réalisation permet également d'associer à l'identifiant de l'utilisateur tout type d'informations complémentaires utilisées par le guide de sélection de correspondant 13 pour réaliser des analyses statistiques sur les appels des utilisateurs 10 ou par le central téléphonique 17 pour réaliser un mode de paiement particulier selon les utilisateurs 10.

Le premier mode de réalisation présuppose que le guide de sélection de correspondant 13 ait accès au numéro de téléphone de l'utilisateur 10. Dans le cas où l'utilisateur 10 utilise un téléphone portable pour transmettre au guide de sélection de correspondant 13 des requêtes sous le format de messages du type SMS, les protocoles d'échange de données actuellement utilisés permettent au guide de sélection de correspondant 13 d'accéder directement au numéro du téléphone portable de l'utilisateur 10.

Toutefois, certains protocoles d'échange de données ne permettent pas au guide de sélection de correspondant 13 d'accéder directement au numéro de téléphone du poste téléphonique 12 à partir duquel l'utilisateur 10 va composer le numéro de téléphone générique. Cela est le cas, par exemple, lorsque l'utilisateur 10 effectue une recherche de correspondants par le guide de sélection de correspondant 13, au moyen d'un module d'échange de données 11, intégré à un portable, communiquant avec le guide de sélection de correspondant 13 selon un protocole d'échange de type WAP. Il en est de même dans le cas où le module d'échange de données 11 et le poste téléphonique 12 sont intégrés sur un micro-ordinateur qui communique avec le guide de sélection de correspondant 13 via Internet. A plus forte raison, lorsque le poste téléphonique 12 et le module d'échange de données 11 sont deux entités physiquement séparées, le numéro de téléphone du poste téléphonique 12 n'est pas directement accessible par le guide de sélection de correspondant 13.

Le guide de sélection de correspondant 13, lors de l'échange de données avec l'utilisateur 10, peut alors lui demander d'indiquer le numéro de téléphone du poste téléphonique 12 à partir duquel il va composer le numéro de téléphone générique. Les étapes suivantes du procédé sont identiques à celles précédemment décrites.

Dans le cas où le numéro du poste téléphonique 12 n'est pas accessible par le guide de sélection de correspondant 13 et/ou le central téléphonique 17, la présente invention propose des deuxième et troisième modes de réalisation, pour lesquels l'identifiant de l'utilisateur 10 n'est pas le numéro de téléphone du poste téléphonique 12.

Selon le second mode de réalisation, le guide de sélection de correspondant 13 transmet à l'utilisateur 10 non seulement un numéro de téléphone générique mais également un code numérique correspondant à un nombre limité de chiffres téléphoniques. L'identifiant de l'utilisateur correspond alors à ce code numérique.

L'ensemble formé par le numéro de téléphone générique suivi du code numérique est composé sur le poste téléphonique 12. Selon les protocoles de communication utilisés entre le central téléphonique 17 et le réseau téléphonique 21, l'interprétation du code numérique peut se faire de façon différente. Dans le cas où le protocole d'échange entre le central téléphonique 17 et le réseau téléphonique 21 le permet, le code numérique est composé directement, sans attente, à la suite du numéro de téléphone générique. Le central téléphonique 17 interprétera le code numérique comme étant une donnée séparée correspondant à l'identifiant de l'utilisateur 10.

Selon certains protocoles d'échange, par exemple du type AIN, le réseau téléphonique 21 peut ne pas transmettre le code numérique si celui-ci est accolé au numéro de téléphone générique. Il est alors nécessaire de réaliser une attente entre la composition du code numérique et celle du numéro de téléphone générique. Le code numérique est composé une fois que la liaison est établie entre le poste téléphonique 12 et le central téléphonique 17. Le central téléphonique 17 reçoit alors le code numérique et l'interprète comme étant l'identifiant de l'utilisateur 10.

Pratiquement, cette attente peut être obtenue de différentes façons selon la nature du poste téléphonique 12 et du module d'échange de données 11. Ainsi, lorsque le poste téléphonique 12 est intégré à un micro-ordinateur propre à composer automatiquement le numéro de téléphone générique, un programme peut provoquer une attente avant la composition automatique du code numérique suite à celle du numéro de téléphone générique. Lorsque la composition du numéro de téléphone générique et du code numérique doit être exécutée manuellement par l'utilisateur 10 seul (par exemple pour un poste fixe), il faut que l'attente, lorsqu'elle est nécessaire, soit exécutée par l'utilisateur 10 lui-même.

Dans tous les cas, en supposant que le central téléphonique 17 puisse interpréter le code numérique comme étant l'identifiant de l'utilisateur 10, la suite du procédé, selon le second mode de réalisation, est similaire à ce qui a été détaillé précédemment.

Selon le troisième mode de réalisation, on considère qu'il n'est pas possible d'utiliser comme identifiant de l'utilisateur 10 ni un code numérique annexé au numéro de téléphone générique, ni le numéro de téléphone de l'utilisateur 10. Dans ce cas, l'identifiant de l'utilisateur 10 est confondu avec le numéro de téléphone générique lui-même.

Le guide de sélection de correspondant 13 dispose alors d'un ensemble de numéros de téléphone génériques disponibles susceptibles d'être transmis à des utilisateurs 10. Lorsqu'un utilisateur 10, suite à l'échange de données avec le guide de sélection de correspondant 13, via la liaison 14, a finalement sélectionné un correspondant 19, le guide de sélection de correspondant 13 lui retourne un numéro de téléphone générique qu'il retire de la liste des numéros de téléphone génériques disponibles. Il initie alors une temporisation associée au numéro de téléphone générique transmis.

Le guide de sélection de correspondant 13 transmet alors au répertoire d'associations 15 le numéro de téléphone générique, et le numéro de téléphone direct du correspondant 19. Lorsque l'utilisateur 10 est mis en relation avec le central téléphonique 17, suite à la composition du numéro de téléphone générique, celui-ci transmet une requête au répertoire d'associations 15 pour obtenir le numéro de téléphone direct du correspondant 19 à partir du numéro de téléphone générique seul. Le répertoire d'associations 15 transmet alors au central téléphonique 17 le numéro de téléphone direct du correspondant 19, et le central téléphonique 17 oriente l'appel téléphonique de l'utilisateur 10 vers le correspondant 19.

Le répertoire d'associations 15 retourne alors au guide de sélection de correspondant 13 un message indiquant que le numéro de téléphone générique a été composé. Le guide de sélection de correspondant 13 replace alors le numéro de téléphone générique dans l'ensemble des numéros de téléphone génériques disponibles et arrête la temporisation.

Lorsque la temporisation associée au numéro de téléphone générique, transmis à l'utilisateur 10, dépasse une durée déterminée T, le guide de sélection de correspondant 13 replace automatiquement le numéro de téléphone générique dans l'ensemble des numéros de téléphone génériques disponibles même s'il n'a pas reçu de message du répertoire d'associations 15 indiquant que le numéro de téléphone générique a été utilisé par l'utilisateur 10. Il peut alors associer à nouveau ce numéro de téléphone générique à une sélection d'un autre utilisateur. De ce fait, si le numéro de téléphone générique est composé après la durée T par l'utilisateur auquel il était associé pendant cette durée T, il est possible que l'utilisateur ne soit pas mis en relation avec le correspondant 19 qu'il aura sélectionné, si le guide de sélection de correspondant 13 a déjà réutilisé ce numéro de téléphone générique pour une autre sélection.

Ainsi, la correspondance entre le numéro de téléphone générique (correspondant à l'identifiant de l'utilisateur) et le numéro de téléphone direct du correspondant 19 est établi pendant une durée déterminée, fixée par le guide de sélection de correspondant 13. Ce troisième mode de réalisation impose que l'utilisateur 10 compose le numéro de téléphone générique dans une durée suffisamment courte suite à sa sélection de correspondant 19.

Le troisième mode de réalisation peut facilement s'appliquer au cas où le guide de sélection de correspondant 13 correspond, au moins en partie, à un service téléphonique, c'est-à-dire que le module d'échange de données 11 et le poste téléphonique 12 sont éventuellement confondus, la liaison entre le module d'échange de données 11 et le guide de sélection de correspondant 13 se faisant par le réseau téléphonique 21. Dans ce cas, l'échange de données est vocal.

Une partie des caractéristiques du troisième mode de réalisation peuvent être intégrées aux premier et deuxième modes.

En effet, dans le cas du deuxième mode de réalisation, la taille du code numérique, c'est-à-dire le nombre de chiffres téléphoniques qui le constituent, dépend du nombre de triplets (numéro de téléphone générique, code numérique, numéro de téléphone direct de correspondant 19) que le guide de sélection de correspondant 13 doit gérer à un même moment, c'est-à-dire le nombre de sélections présentes à un même moment. Plus ce nombre est important, plus le nombre de chiffres téléphoniques du code numérique doit être grand. Ceci peut s'avérer contraignant, en particulier lorsque l'utilisateur doit composer manuellement le code numérique. L'utilisation d'un ensemble de numéros de téléphone génériques permet de diminuer le nombre de chiffres téléphoniques composant le code numérique tout en permettant de gérer, à un même moment, le même nombre de sélections de correspondants.

L'utilisation d'une temporisation, initialisée lors de la transmission d'un numéro de téléphone générique à un utilisateur 10, et à l'issue de laquelle le numéro de téléphone générique est à nouveau disponible peut être avantageusement appliquée dans les trois modes de réalisation. En effet, elle permet d'éviter qu'un numéro de téléphone générique reste indisponible lorsque l'utilisateur 10 auquel il a été transmis ne le compose pas.

Les trois modes de réalisation permettent avantageusement de réduire le nombre de numéros de téléphone génériques que doit acquérir le guide de sélection de correspondant 13. Ces numéros de téléphone génériques peuvent être avantageusement des numéros de téléphone à tarification spéciale permettant ainsi au guide de sélection de correspondant 13 de recevoir un paiement du service rendu lorsque l'utilisateur 10 compose le numéro de téléphone générique. Le guide de sélection de correspondant 13 peut par exemple disposer de différents numéros génériques de tarifications différentes selon le correspondant 19 qui est sélectionné par l'utilisateur 10. En particulier, on peut envisager le cas où l'un des numéros est gratuit.

## Revendications

1. Procédé de sélection d'un correspondant (19) par un utilisateur (10) au moyen d'un guide de sélection de correspondant (13), et mise en relation, via le réseau téléphonique (21), de l'utilisateur (10) et du correspondant (19), **caractérisé en ce qu'**il comprend les étapes suivantes :
- sélection d'un correspondant (19) par l'utilisateur (10) au moyen du guide de sélection de correspondant (13), et transmission par ce guide (13) à l'utilisateur (10) d'un numéro de téléphone générique ;
- composition par l'utilisateur (10) du numéro de téléphone générique, et établissement d'une liaison, via le réseau téléphonique (21), entre l'utilisateur (10) et un central téléphonique (17) d'orientation d'appels ;
- établissement, par le central téléphonique (17), d'une liaison téléphonique, entre l'utilisateur (10) et le correspondant (19) en utilisant le numéro de téléphone générique, et un identifiant de l'utilisateur (10), issus de la liaison avec l'utilisateur (10), et un numéro de téléphone direct du correspondant (19), issu d'une liaison avec le guide de sélection de correspondant (13).

2. Procédé selon la revendication 1, **caractérisé en ce que** le guide de sélection de correspondant (13) transmet à un répertoire d'associations (15) le numéro de téléphone générique, l'identifiant de l'utilisateur (10), et le numéro de téléphone direct du correspondant (19) sélectionné, le central téléphonique (17) venant interroger le répertoire d'associations (15) à partir du numéro de téléphone générique et de l'identifiant de l'utilisateur (10) pour obtenir le numéro de téléphone direct du correspondant (19).

3. Procédé selon la revendication 2, **caractérisé en ce que** le guide de sélection de correspondant (13) transmet à l'utilisateur (10) un numéro de téléphone générique choisi parmi un ensemble de numéros de téléphone génériques disponibles, et retire alors le numéro de téléphone générique choisi de l'ensemble des numéros de téléphone génériques disponibles.

4. Procédé selon la revendication 3, **caractérisé en ce que** lorsque le répertoire d'associations (15) reçoit du central téléphonique (17) un numéro de téléphone générique, il le transmet au guide de sélection de correspondant (13) qui replace ce numéro de téléphone générique dans l'ensemble des numéros de téléphone génériques disponibles.

5. Procédé selon la revendication 3, **caractérisé en ce que** le guide de sélection de correspondant (13) replace le numéro de téléphone générique dans l'ensemble des numéros de téléphone génériques disponibles lorsque la durée écoulée depuis le dernier retrait du numéro de téléphone générique de l'ensemble des numéros de téléphone génériques disponibles dépasse une durée déterminée.

6. Procédé selon la revendication 1, **caractérisé en ce que** l'identifiant de l'utilisateur (10) est le numéro de téléphone du poste téléphonique (12) de l'utilisateur (10) à partir duquel le numéro de téléphone générique est composé.

7. Procédé selon la revendication 1, **caractérisé en ce que** l'identifiant de l'utilisateur (10) comprend au moins un code numérique, ce code étant composé à la suite du numéro de téléphone générique.

8. Procédé selon la revendication 3, **caractérisé en ce que** l'identifiant de l'utilisateur (10) est le numéro de téléphone générique.

9. Dispositif de sélection d'un correspondant (19) par un utilisateur (10) et de mise en relation, via le réseau téléphonique (21), d'un poste téléphonique (12) de l'utilisateur (10) sur lequel un numéro de téléphone générique a été composé, avec un poste téléphonique (20) du correspondant (19) ayant un numéro de téléphone direct, **caractérisé en ce qu'**il comprend un module d'échange de données propre à transmettre à un guide de sélection de correspondant (13) une sélection réalisée par l'utilisateur (10), le guide de sélection de correspondant (13) envoyant en retour au module d'échange de données le numéro de téléphone générique, un central téléphonique (17) propre à orienter l'appel, émis par le poste téléphonique (12) de l'utilisateur (10), vers le poste téléphonique (20) du correspondant (19) au moyen du numéro de téléphone direct du correspondant (19), et un répertoire d'associations (15) propre à recevoir du guide de sélection de correspondant (13) le numéro de téléphone générique, le numéro de téléphone direct du correspondant (19), et l'identifiant de l'utilisateur, et à transmettre au central téléphonique (17), sur requête de celui-ci, le numéro de téléphone direct du correspondant (19).

10. Dispositif selon la revendication 9, **caractérisé en ce que** les modules d'échange de données et le poste téléphonique (12) de l'utilisateur (10) sont intégrés sur un téléphone portable.

## Claims

1. A method of selection of a party (19) by a user (10) by means of a party selection guide (13), and connection, via the telephone network (21), of the user (10) and the party (19), **characterized in that** it comprises the steps of:
- selection of a party (19) by the user (10) by means of the party selection guide (13), and transmission by this guide (13) to the user (10) of a generic telephone number;
- dialing by the user (10) of the generic telephone number, and activation of a link, via the telephone network (21), between the user (10) and a call directing telephone exchange (17);
- activation, by the telephone exchange (17), of a telephone link, between the user (10) and the party (19) by using the generic telephone number, and an identifier of the user (10), originating from the link with the user (10), and a direct number of the party (19), originating from a link with the party selection guide (13).

2. The method of claim 1, **characterized in that** the party selection guide (13) transmits to an association directory (15) the generic telephone number, the identifier of the user (10), and the direct telephone number of the selected party (19), the telephone exchange (17) polling the association directory (15) based on the generic telephone number and on the identifier of the user (10) to obtain the direct telephone number of the party (19).

3. The method of claim 2, **characterized in that** the party selection guide (13) transmits to the user (10) a generic telephone number selected from a set of available generic telephone numbers, and then retrieves the selected generic telephone number from the set of available generic telephone numbers.

4. The method of claim 3, **characterized in that** when the association directory (15) receives a generic telephone number from the telephone exchange (17), it transmits it to the party selection guide (13) which replaces this generic telephone number in the set of available generic telephone numbers.

5. The method of claim 3, **characterized in that** the party selection guide (13) replaces the generic telephone number in the set of available generic telephone numbers when the time elapsed from the last retrieval of the generic telephone number from the set of available generic telephone numbers exceeds a determined time period.

6. The method of claim 1, **characterized in that** the identifier of the user (10) is the telephone number of the telephone set (12) of the user (10) from which the generic telephone number is dialed.

7. The method of claim 1, **characterized in that** the identifier of the user (10) comprises at least one digital code, this code being dialed after the generic telephone number.

8. The method of claim 3, **characterized in that** the identifier of the user (10) is the generic telephone number.

9. A device of selection of a party (19) by a user (10) and of connection, via the telephone network (21), of a telephone set (12) of the user (10) on which the generic telephone number has been dialed, with a telephone set (20) of the party (19) having a direct telephone number, **characterized in that** it comprises a data exchange unit capable of transmitting to a party selection guide (13) a selection performed by the user (10), the party selection guide (13) sending in return to the data exchange unit the generic telephone number, a telephone exchange (17) capable of directing the call, transmitted by the telephone set (12) of the user (10), to the telephone set (20) of the party (19) by means of the direct telephone number of the party (19), and an association directory (15) capable of receiving from the party selection guide (13) the generic telephone number, the direct telephone number of the party (19), and the identifier of the user, and of transmitting to the telephone exchange (17), on request thereof, the direct telephone number of the party (19).

10. The device of claim 9, **characterized in that** the data exchange units and the telephone set (12) of the user (10) are integrated on a cellular phone.

## Patentansprüche

1. Verfahren zum Auswählen eines Teilnehmers (19) durch einen Nutzer (10) mittels einer Teilnehmerauswahlführung (13) und zum Verbinden des Nutzers (10) und des Teilnehmers (19) mittels des Telefonnetzes (21), **gekennzeichnet durch** die folgenden Verfahrensschritte:
- Auswählen eines Teilnehmers (19) **durch** den Nutzer (10) mit Hilfe der Teilnehmeiauswahlführung (13) und Ubertragen einer generischen Telefonnummer über diese Führung (13) an den Nutzer (10);
- Wählen der genetischen Telefonnummer **durch** den Nutzer (10) und Einrichten einer Verbindung zwischen dem Nutzer (10) und einer Telefonzentrale (17) zur Weiterleitung von Anrufen über das Telefonnetz (21);
- Einrichten einer Telefonverbindung zwischen dem Nutzer (10) und dem Teilnehmer (19) **durch** die Telefonzentrale (17) unter Verwendung der generischen Telefonnummer und einer Kennung des Nutzers (10), die aus der Verbindung mit dem Nutzer (10) stammt, und einer direkten Telefonnummer des Teilnehmers (19), die aus einer Verbindung mit der leilnehmerauswahlführung (13) stammt.

2. Verfahren nach Anspruch 1, **dadurch gekennzeichnet, daß** die Teilnehmerauswahlführung (13) die generische Telefonnummer, die Kennung des Nutzers (10) und die direkte Telefonnummer des ausgewählten Teilnehmers (19) an ein Verbandsverzeichnis (15) sendet, wobei die Telefonzentrale (17) das Veibandsverzeichnis (15) basierend auf der generischen Telefonnummer und der Kennung des Nutzers (10) abfragt, um die direkte Telefonnummer des Teilnehmers (19) zu erhalten

3. Verfahren nach Anspruch 2, **dadurch gekennzeichnet, daß** die Teilnehmerauswahlführung (13) an den Nutzer (10) eine generische Telefonnummer sendet, die aus einer Menge verfügbarer genetischer Telefonnummern ausgewählt wird, und dann die gewählte generische Telefonnummer aus der Menge der verfügbaren generischen Telefonnummern wiedergewinnt

4. Verfahren nach Anspruch 3, **dadurch gekennzeichnet, daß** dann, wenn das Verbandsverzeichnis (15) von der Telefonzentrale (17) eine generische Telefonnummer empfängt, es diese an die Teilnehmerauswahlführung (13) sendet, welche diese generische Telefonnummer in der Menge der verfügbaren generischen Telefonnummern ersetzt.

5. Verfahren nach Anspruch 3, **dadurch gekennzeichnet, daß** die Teilnehmerauswahlführung (13) die generische Telefonnummer in der Menge der verfügbaren generischen Telefonnummern ersetzt, wenn die Dauer, welche seit dem letzten Abrufen der generischen Telefonnummer aus der Menge der verfügbaren generischen Telefonnummern verstrichen ist, eine vorgegebene Dauer überschreitet.

6. Verfahren nach Anspruch 1, **dadurch gekennzeichnet, daß** die Kennung des Nutzers (10) die Telefonnummer des Telefongerätes (12) des Nutzers (10), von der die generische Telefonnummer gewählt wurde, ist.

7. Verfahren nach Anspruch 1, **dadurch gekennzeichnet, daß** die Kennung des Nutzers (10) wenigstens einen digitalen Code umfaßt, wobei dieser Code nach der generischen Telefonnummer gewählt wird

8. Verfahren nach Anspruch 3, **dadurch gekennzeichnet, daß** die Kennung des Nutzers (10) die generische Telefonnummer ist.

9. Vorrichtung zum Auswählen eines Teilnehmers (19) durch einen Nutzer (10) und zum Verbinden eines Telefongerätes (12) des Nutzers (10), auf dem eine generische Telefonnummer gewählt wurde, mit einem Telefongerät (20) des Teilnehmers (19), der eine direkte Telefonnummer hat, über das Telefonnetz (21), **gekennzeichnet durch** eine Modul zum Austauschen von Daten, das dazu eingerichtet ist, eine **durch** den Nutzer (10) durchgeführte Auswahl an eine Teilnehmerauswahlführung (13) zu senden, wobei die Teilnehmerauswahlführung (13) an das Modul zum Austauschen von Daten die generische Telefonnummer zurücksendet, eine Telefonzentrale (17), die dazu eingerichtet ist, den von dem Telefongerät (12) des Nutzers (10) ausgesandten Anruf zu dem Telefongerät (20) des Teilnehmers (19) basierend auf der direkten Telefonnummer des Teilnehmers (19) zu richten, und ein Verbandsverzeichnis (15), das dazu eingerichtet ist, von der Teilnehmerauswahlführung (13) die generische Telefonnummer, die direkte Telefonnummer des Teilnehmers (19) und die Kennung des Nutzers zu empfangen und an die Telefonzentrale (17) auf deren Anforderung die direkte Telefonnummer des Teilnehmers (19) zu senden.

10. Vorrichtung nach Anspruch 9, **dadurch gekennzeichnet, daß** die Module zum Austauschen von Daten und das Telefongerät (12) des Nutzers (10) in einem tragbaren Telefon integriert sind
